# EUROPEAN PATENT APPLICATION

(11) **EP 4 729 398 A1**
(43) Date of publication of application: **22.04.2026**
(21) Application number: 25203184.4
(22) Date of filing: 18.09.2025
(51) Int. Cl.: B62D 35/02

(54) **FRONT AERODYNAMIC DEVICE**

(30) Priority: 19.09.2024 GB 202413819
(71) Applicant: McLaren Automotive Limited, Woking, Surrey GU21 4YH (GB)
(72) Inventor: Algoo, Robin, Woking, GU21 4YH (GB)
(74) Representative: Slingsby Partners LLP

(57) **Abstract**

Disclosed is an aerodynamic device (100) for mounting to a front underside of a vehicle (700), the device comprising: a support structure (101), the support structure being movably mountable to the vehicle in a mounting zone; and a plurality of discrete aerodynamic bodies (102a, 102b, 102c), each aerodynamic body being attached to the support structure such that actuation of movement of the support structure causes collective movement of the aerodynamic bodies from a first configuration to a second configuration, the first configuration of the aerodynamic bodies having a first combined angle of attack and the second configuration of the aerodynamic bodies having a second combined angle of attack, the first combined angle of attack being different to the second combined angle of attack.

## Description

This invention relates to an aerodynamic device for mounting to a front underside of a vehicle.

Vehicles comprise body panels for covering the internal parts of the vehicle. The body panels may be used to guide the incoming airflow over the vehicle. Additionally, further panels may be attached to the body panels to further guide the incoming airflow over the vehicle. Such panels which guide incoming airflow may be known as aerodynamic bodies. High performance vehicles, such as supercars, may have multiple aerodynamic bodies, with specific designs, to optimise the aerodynamics of the vehicle. The aerodynamic bodies may also be movable relative to one another and/or relative to the vehicle. The aerodynamic bodies may be fitted to different parts of the vehicle, such as the underside, the roof, the front and/or the rear of the vehicle.

Aerodynamic bodies may guide the incoming airflow so as to provide lift and/or downforce forces on the vehicle. This may be beneficial for increased vehicle speed, particularly in corners. Aerodynamic bodies may guide the incoming airflow so as to provide and/or reduce drag forces on the vehicle. This may be beneficial for reduced air resistance for increased vehicle speed, or increased air resistance for increased braking force. Aerodynamic bodies may guide the incoming airflow towards certain parts of the vehicle, such as air intakes used for cooling etc. It can be particularly advantageous to guide airflow out from the underside of the vehicle, down the sides of the vehicle, so as to increase downforce through a pressure differential between the underside of the vehicle and the free flow and/or provide a cooling flow such as to mid-engine radiator air intakes. Designing aerodynamic bodies to guide the airflow in a controlled and efficient manner can be challenging.

Aerodynamic devices may comprise one or more discrete aerodynamic bodies. The aerodynamic devices may be fitted to different parts of the vehicle, such as the underside, the topside, the front and/or the rear of the vehicle.

If an aerodynamic device comprises a plurality of discrete aerodynamic bodies, in which a rearward aerodynamic body is behind a forward aerodynamic body with respect to the incoming airflow, particularly if the aerodynamic bodies are in close proximity, then the airflow over the forward aerodynamic body can affect the airflow over the rearward aerodynamic body. If the angle of attack of the forward aerodynamic body is particularly high, particularly with respect to the angle of attack of the rearward aerodynamic body, then this may create significant wash in the airflow over the rearward aerodynamic body. Due to the wash in the airflow over the rearward aerodynamic body, the rearward aerodynamic body may stall. If an aerodynamic body stalls, then it may not perform as intended providing limited control to the guiding of the airflow. This can be particularly problematic when the aerodynamic device is fitted to the front underside of the vehicle, because generating wash at the front of the vehicle can have a detrimental impact on any aerodynamic devices fitted rearwards of the front aerodynamic device, due to wash in the downstream flow.

The chassis of a vehicle often comprise a generally flat floor. This may provide maximum cabin space for occupants. In high performance vehicles, it can be advantageous for the roof of the car to be low, for reduced drag and lower centre of mass. However, to maintain space in the cabin, this naturally results in the floor of the chassis also being low and close to the driving surface, such as the road. With a low chassis, there is limited space for any aerodynamic bodies to be fitted to the underside of the vehicle, particularly towards the centre of the vehicle with respect to the length of the vehicle where the bulk of the chassis is located. As such, guiding of the airflow under the centre of the vehicle can be limited.

As a result, most high-performance vehicles comprise an aerodynamic device at the front underside of the vehicle, and/or the rear underside of the vehicle. However, this can result in the vehicle having a high pitch sensitivity, as the lift/downforce forces are acting at the front and rear of the vehicle with a larger moment arm. This can result in an aerodynamic arrangement which is difficult to control.

Additionally, the front tyres of a vehicle produce tyre wake. The trye wake can also have a detrimental impact on any aerodynamic devices fitted rearwards due to wash in the downstream flow.

It is therefore desirable for improved aerodynamic devices which address the aforementioned problems.

According to a first aspect of the present invention there is provided an aerodynamic device for mounting to a front underside of a vehicle, the device comprising: a support structure, the support structure being movably mountable to the vehicle in a mounting zone; and a plurality of discrete aerodynamic bodies, each aerodynamic body being attached to the support structure such that actuation of movement of the support structure causes collective movement of the aerodynamic bodies from a first configuration to a second configuration, the first configuration of the aerodynamic bodies having a first combined angle of attack and the second configuration of the aerodynamic bodies having a second combined angle of attack, the first combined angle of attack being different to the second combined angle of attack.

In some implementations, the device may comprise a joint attached to the support structure, the joint permitting the support structure to move relative to the vehicle.

In some implementations, the support structure may be permitted to rotate relative to the vehicle about a mounting axis in the mounting zone such that actuation of movement of the support structure causes collective pitching of the aerodynamic bodies from the first configuration to the second configuration.

In some implementations, the support structure may be permitted to displace relative to the vehicle in the mounting zone such that actuation of movement of the support structure causes collective displacement of the aerodynamic bodies from the first configuration to the second configuration.

In some implementations, the actuation of the support structure may be active.

In some implementations, the device may comprise a driver to actuate the support structure. In some implementations, the driver may comprise a motor and a gear system.

In some implementations, the actuation of the support structure may be passive. In some implementations, the device may be arranged such that air pressure on aerodynamic bodies from incoming airflow to the vehicle causes a passive actuation of the support structure.

In some implementations, each of the aerodynamic bodies may be spaced from the mounting zone by the support structure. In some implementations, each of the aerodynamic bodies may be spaced from the mounting zone by at least 100mm.

In some implementations, each of the aerodynamic bodies are directly attached to the support structure.

In some implementations, one or more of the aerodynamic bodies may be permitted to rotate relative to the support structure.

In some implementations, the actuation of the rotation of the aerodynamic bodies may be active.

In some implementations, the actuation of the rotation of the aerodynamic bodies may be passive.

In some implementations, one or more of the aerodynamic bodies may be fixed relative to the support structure.

In some implementations, one or more of the aerodynamic bodies may comprise an aerofoil cross section. In some implementations, one or more of the aerodynamic bodies may comprise a planar shape. In some implementations, one or more of the aerodynamic bodies may comprise a planform shape. In some implementations, one ore more the aerodynamic bodies may comprise a fin wing, splitter of diffuser.

In some implementations, the first configuration of the aerodynamic bodies may have a first downforce and/or drag characteristic, and the second configuration of the aerodynamic bodies may have a second downforce and/or drag characteristic, the first downforce and/or drag characteristic being different to the second downforce and/or drag characteristic.

In some implementations, the device may be arranged such that incoming airflow to the vehicle passes from one aerodynamic body to another aerodynamic body.

In some implementations, each of the aerodynamic bodies may comprise a leading edge, a trailing edge, and at least two outboard edges.

In some implementations, the device may be arranged such that incoming airflow to the vehicle causes primary vortices to be generated off the outboard edges of the aerodynamic bodies.

According to a second aspect of the present invention there is provided an aerodynamic system comprising the aerodynamic device and further comprising a further aerodynamic body for mounting to the underside of the vehicle, the further aerodynamic body being: fixedly mountable to the vehicle; located rearwards of the aerodynamic bodies such that incoming airflow to the vehicle passes from one or more of the aerodynamic bodies to the further aerodynamic body; and not directly attached to the support structure.

In some implementations, the further aerodynamic body may comprise a leading edge, a trailing edge, and at least two outboard edges.

In some implementations, the further aerodynamic body may comprise mounting structure by which the further aerodynamic body is fixable to the vehicle, the mounting structure being located wholly inboard of the outboard edges of the further aerodynamic body.

In some implementations, the system may be arranged such that incoming airflow to the vehicle causes secondary vortices to be generated off the outboard edges of the further aerodynamic body.

In some implementations, the device may be arranged such that the at least a portion of the primary vortices and the secondary vortices are counterrotating and offset so that the portion of primary vortices increase the force of the secondary vortices.

According to a third aspect of the present invention there is provided vehicle comprising the aerodynamic device.

According to a fourth aspect of the present invention there is provided vehicle comprising two aerodynamic devices, a first device being located on a first side of the vehicle and a second device being located on a second side of the vehicle.

In some implementations, the vehicle may further comprise a front wing, the first device being located to a first side of the front wing and a second device being located to a second side of the front wing.

In some implementations, the aerodynamic bodies of the first device and the second device may be aligned inboard of the front wheels of the vehicle.

In some implementations, the vehicle may further comprise the further aerodynamic body.

In some implementations, the further aerodynamic device may be aligned inboard of the aerodynamic bodies of the first device and the aerodynamic bodies of the second device.

The present invention will now be described by way of example with reference to the accompanying drawings. In the drawings:
Figures 1a-b schematically illustrate a first aerodynamic device for mounting to a front underside of a vehicle: Figure 1a shows a first configuration; and Figure 1b shows a second configuration.
Figures 2a-d schematically illustrate a second aerodynamic device for mounting to an underside of a vehicle: Figure 2a shows a side view; Figure 2b shows a top view; Figure 2c shows a front view of a first embodiment; and Figure 2d shows a front view of a second embodiment.
Figures 3a-c schematically illustrate an aerodynamic chassis for a vehicle: Figure 3a shows a side view; Figure 3b shows a top view; and Figure 3c shows a bottom view.
Figure 4 schematically illustrates an aerodynamic system from a side view comprising the first aerodynamic device of Figures 1a-b, the second aerodynamic device of Figures 2a-c, and the aerodynamic chassis of Figures 3a-c.
Figure 5 schematically illustrates the aerodynamic system of Figure 4 from a front view comprising the first aerodynamic device of Figures 1a-b, the second aerodynamic device of Figures 2a-c, and the aerodynamic chassis of Figures 3a-c.
Figure 6 schematically illustrates the aerodynamic system of Figure 4 from a perspective view comprising the first aerodynamic device of Figures 1a-b, the second aerodynamic device of Figures 2a-c, and the aerodynamic chassis of Figures 3a-c.
Figure 7 schematically illustrates a vehicle comprising the aerodynamic system of Figures 4-6.

The following description is presented to enable any person skilled in the art to make and use the invention, and is provided in the context of a particular application. Various modifications to the disclosed embodiments will be readily apparent to those skilled in the art.

The general principles defined herein may be applied to other embodiments and applications without departing from the spirit and scope of the present invention. Thus, the present invention is not intended to be limited to the embodiments shown, but is to be accorded the widest scope consistent with the principles and features disclosed herein.

The present invention relates to an aerodynamic device for mounting to a front underside of a vehicle.

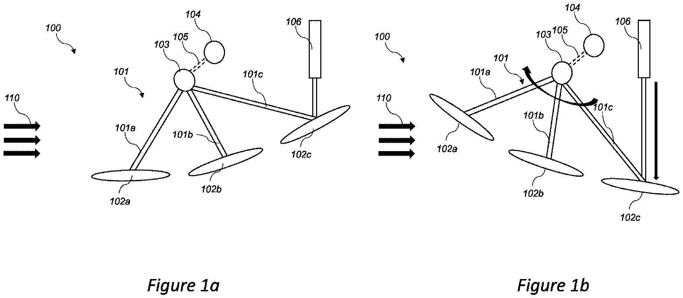

Figures 1a-b illustrate a first aerodynamic device 100. The aerodynamic device 100 may comprise a support structure 101. The aerodynamic device 100 may comprise one or more aerodynamic bodies 102. The aerodynamic device 100 may receive an incoming airflow 110. The incoming airflow 110 may be a result of the vehicle, on which the aerodynamic device 100 is fitted, travelling at a certain velocity. The incoming airflow 110 may have the same velocity as the vehicle. The incoming airflow 110 may have a higher or lower velocity than the vehicle proximal to the aerodynamic device 100 due to local velocity changes from the aerodynamic bodies 102.

The aerodynamic device 100 may comprise a plurality of aerodynamic bodies 102a, 102b, 102c. Figures 1a-c show three aerodynamic bodies 102a, 102b, 102c. A different number of aerodynamic bodies 102a, 102b, 102c may be provided. The number of aerodynamic bodies 102a, 102b, 102c may be dependent on the airflow guiding requirements for the aerodynamic device 100. The aerodynamic bodies 102a, 102b, 102c may be discrete. The aerodynamic bodies 102a, 102b, 102c may be separate from one another. The aerodynamic bodies 102a, 102b, 102c may be independent from one another. The aerodynamic bodies 102a, 102b, 102c may not be directly attached to one another. Although, the aerodynamic bodies 102a, 102b, 102c may be indirectly attached to one another via an intermediate component which is not one of the aerodynamic bodies 102a, 102b, 102c. The aerodynamic bodies 102a, 102b, 102c may provide independent airflow guidance.

The incoming airflow 110 may pass over each of the aerodynamic bodies 102a, 102b, 102c. The incoming airflow 110 may pass over each of the aerodynamic bodies 102a, 102b, 102c in turn. The incoming airflow 110 may first pass over a first aerodynamic body 102a. The first aerodynamic body 102a may be the most forward with respect to the vehicle. The airflow over the first aerodynamic body 102a may then pass over a second aerodynamic body 102b. The second aerodynamic body 102b may be the second most forward with respect to the vehicle. The airflow over the second aerodynamic body 102b may then pass over a third aerodynamic body 102c. The third aerodynamic body 102c may be the third most forward with respect to the vehicle. Further aerodynamic bodies 102 may be provided.

The aerodynamic bodies 102a, 102b, 102c may each comprise a leading edge, a trailing edge and at least two outboard edges. The aerodynamic bodies 102a, 102b, 102c may comprise a generally square or rectangular plan shape when viewed from above. One or more of the aerodynamic bodies 102a, 102b, 102c may comprise an aerofoil cross section when viewed from the side. In this way, the aerodynamic bodies 102a, 102b, 102c may provide lift and/or downforce, depending on their configuration. The aerofoil cross section may comprise non-zero chamber. This may provide a bias towards lift or downforce in a neutral configuration of the aerofoil. One or more of the aerodynamic bodies 102a, 102b, 102c may comprise a planar shape. In other words, the aerodynamic bodies 102a, 102b, 102c may be much longer and/or wider than they are thick. This may provide a large area for guiding the airflow. One or more of the aerodynamic bodies 102a, 102b, 102c may comprise a thin sheet. In other words, the aerodynamic bodies 102a, 102b, 102c may generally form a flat surface. This may be simpler to manufacture. One or more of the aerodynamic bodies 102a, 102b, 102c may comprise a planform shape. In other words, when viewed from above, the aerodynamic body 102a, 102b, 102c may taper towards the outboard edges. One or more of the aerodynamic bodies 102a, 102b, 102c may comprise a fin, wing, splitter or diffuser.

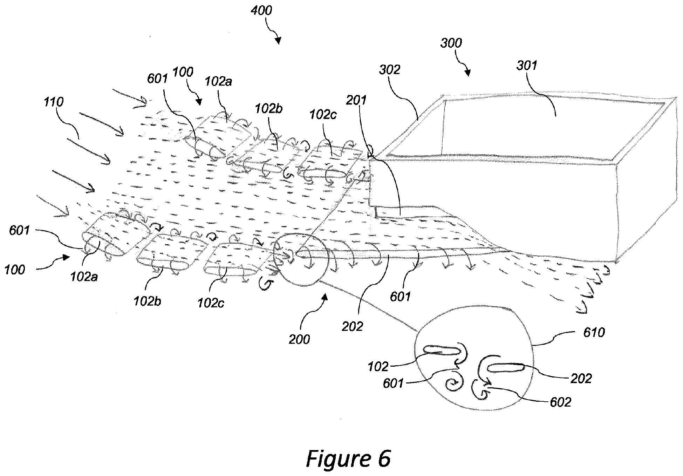

The incoming airflow 110 may cause primary vortices 601 to be generated off the outboard edges of the aerodynamic bodies 102a, 102b, 102c. The airflow may fall off the outboard edges of the aerodynamic bodies 102a, 102b, 102c generating primary vortices 601. The primary vortices 601 may continue downstream rearwards of the aerodynamic bodies 102a, 102b, 102c. Figure 6 illustrates how the primary vortices 601 may be formed. The primary vortices 601 may continue downstream and away from the sides of the vehicle. This may reduce the turbulent airflow under the vehicle, improving the guiding of the airflow. This may also push tyre wake down the sides of the vehicle.

Each of the aerodynamic bodies 102a, 102b, 102c may be attached to the support structure 101. Each of the aerodynamic bodies 102a, 102b, 102c may be directly attached to the support structure 101. As shown in Figures 1a-b, the support structure 101 may comprise a plurality of legs 101a, 101b, 101c. Each of the aerodynamic bodies 102a, 102b, 102c may be respectively attached to one of the legs 101a, 101b, 101c. The legs 101a, 101b, 101c may be attached to one another.

Alternatively, one or more of the aerodynamic bodies 102a, 102b, 102c may be indirectly attached to the support structure 101. For example, one of the aerodynamic bodies 102a, 102b, 102c may be attached to the support structure 101, and one or more of the other aerodynamic bodies 102a, 102b, 102c may be attached, by means of a connecting component, to the aerodynamic body 102a, 102b, 102c attached to the support structure 101.

Attachment of the aerodynamic bodies 102a, 102b, 102c to the support structure 101 means that actuation of movement of the support structure 101 may provide a collective movement of each of the aerodynamic bodies 102a, 102b, 102c. Put another way, when the support structure 101 is moved, each of the aerodynamic bodies 102a, 102b, 102c collectively move together with the support structure 101. In this way, a single input may be provided to control the movement of all of the aerodynamic bodies 102a, 102b, 102c. This may simplify the control of the aerodynamic device 100.

The movement of the support structure 101 may cause collective movement of the aerodynamic bodies 102a, 102b, 102c from a first configuration to a second configuration. For example, each of the aerodynamic bodies 102a, 102b, 102c may translate and/or translate to a new position. The collective movement can provide the following advantages: a reduction in pitch sensitivity, a reduction in the forces applied to the front axle/front structure of the vehicle, reduction is stall of the aerodynamic bodies 102a, 102b, 102c.

The first configuration and the second configuration of the aerodynamic bodies 102a, 102b, 102c may result in different combined angles of attack. The first configuration has a first combined angle of attack. The second configuration has a second combined angle of attack. The first combined angle of attack may be different to the second combined angle of attack. The combined angle of attack of the aerodynamic device 100 may be a total of the angles of attack of each of the aerodynamic bodies 102a, 102b, 102c. The combined angle of attack may be the average angle of attack of each of the aerodynamic bodies 102a, 102b, 102c.

If the collective movement of the aerodynamic bodies 102a, 102b, 102c is rotational, then this may change the angle of attack of each of the aerodynamic bodies 102a, 102b, 102c. For example, if the aerodynamic bodies 102a, 102b, 102c collectively rotate upwards, then the angle of attack of each of the aerodynamic bodies 102a, 102b, 102c may increase, which causes the combined angle of attack to increase. Figures 1a-b illustrate this example. In Figure 1a, the aerodynamic bodies 102a, 102b, 102c are in a first configuration. In Figure 1b, the aerodynamic bodies 102a, 102b, 102c are in a second configuration. Between the first and second configurations, the aerodynamic bodies 102a, 102b, 102c collectively rotate upwards, resulting in an increased combined angle of attack.

If the collective movement of the aerodynamic bodies 102a, 102b, 102c is a displacement, then this may also change the angle of attack of each of the aerodynamic bodies 102a, 102b, 102c. For example, if the aerodynamic bodies 102a, 102b, 102c collectively displace at an angle to the incoming flow 110, then the angle of attack of each of the aerodynamic bodies 102a, 102b, 102c may change, which causes the combined angle of attack to change. The incoming airflow 110 may be at a different angle in different locations, and so changing the location of the aerodynamic bodies 102a, 102b, 102c may change the angle of attack with respect to the incoming flow 110.

The collective movement of the aerodynamic bodies 102a, 102b, 102c may also be a combination of rotation and displacement.

The first configuration of the aerodynamic bodies 102a, 102b, 102c may have a first downforce and/or drag characteristic and the second configuration of the aerodynamic bodies 102a, 102b, 102c may have a second downforce and/or drag characteristic. The first downforce and/or drag characteristic may be different to the second downforce and/or drag characteristic. For example, if the second configuration has a higher combined angle of attack than the first configuration, then the second configuration may have a higher lift characteristic and a higher drag characteristic. Similarly, the first configuration may have a higher downforce characteristic and a lower drag characteristic.

The configurations may be set depending on the lift/downforce/drag requirements. For example, high downforce and low drag may be useful for cornering. Low downforce and low drag may be useful for high-speed straights. High downforce and high drag may be useful for braking.

Alternatively, the first configuration and the second configuration of the aerodynamic bodies 102a, 102b, 102c may result in the same combined angles of attack. For example, the first configuration and the second configuration may be used as a stowed configuration and a deployed configuration, respectively.

The support structure 101 may be movably mountable to the vehicle. The support structure 101 may be movably mountable to the vehicle at a mounting zone. The mounting zone may be located at the front underside of the vehicle. For example, the mounting zone may be located near the front axle. The support structure 101 may be attached to the vehicle but still able to move relative to the vehicle.

The aerodynamic device 100 may comprise a joint 103. The joint 103 may be attached to the vehicle. The joint 103 may permit the support structure to move relative to the vehicle. The joint 103 may permit rotational and/or translational movement of the support structure 101 relative to the vehicle.

The support structure 101 may be permitted to rotate relative to the vehicle. The support structure 101 may be permitted to rotate relative to the vehicle by the joint 103. The support structure 101 may be permitted to rotate relative vehicle about a mounting axis. The mounting axis may be in the mounting zone. The joint 103 may provide the mounting axis. For example, the joint 103 may be a ball joint, pivot joint, wrist joint, revolute joint, and/or cylindrical joint. Rotational movement of the support structure 101 may cause collective pitching of the aerodynamic bodies 102a, 102b, 102c. The aerodynamic bodies 102a, 102b, 102c may collectively pitch from the first configuration to the second configuration. The aerodynamic bodies 102a, 102b, 102c collectively pitching may cause the combined angle of attack of the aerodynamic bodies 102a, 102b, 102c to change, as described herein. The collective pitching can provide the following advantages: a reduction in pitch sensitivity, a reduction in the forces applied to the front axle/front structure of the vehicle, reduction is stall of the aerodynamic bodies 102a, 102b, 102c.

The support structure 101 may be permitted to displace relative to the vehicle. The support structure 101 may be permitted to displace relative to the vehicle by the joint 103. The support structure 101 may be permitted to displace relative vehicle in the mounting zone. The mounting zone may define the bounds of the displacement of the support structure 101. The joint 103 may limit the displacement to be within the mounting zone. For example, the joint 103 may comprise limited length rails or slots. Displacement movement of the support structure 101 may cause collective displacement of the aerodynamic bodies 102a, 102b, 102c. The aerodynamic bodies 102a, 102b, 102c may collectively displace from the first configuration to the second configuration. The aerodynamic bodies 102a, 102b, 102c collectively displacing may cause the combined angle of attack of the aerodynamic bodies 102a, 102b, 102c to change, as described herein.

The joint 103 may provide a combination of rotation and displacement of the support structure 101, which may provide a combination of rotation and displacement collective movement of the aerodynamic bodies 102a, 102b, 102c.

The actuation of the support structure 101 may be active. The aerodynamic device 100 may comprise a driver104, 105, 106 configured to actuate the support structure 101. The driver 104, 105, 106 may provide the rotational and/or displacement movement of the support structure 101. The driver 104, 105, 106 may comprise a motor 104. The driver 104, 105, 106may comprise a gear system and/or transmission system 105. The gear system and/or transmission system 105 may transfer the rotational drive of the motor 104 into the rotational and/or displacement actuation of the support structure 101. Alternatively, the driver 104, 105, 106 may comprise an actuator 106. The actuator 106 may be a linear actuator 106. The actuator 106 may transfer linear drive of the actuator 106 into the rotational and/or displacement actuation of the support structure 101. The driver 104, 105, 106 may be attached to the vehicle. The driver 104, 105, 106may be part of the vehicle. The driver 104, 105, 106may be controlled by the vehicle, for example the vehicle control system. The driver 104, 105, 106may be kept out of the incoming flow 110 to improve aerodynamics. If a motor 104 is used, the drive may be provided at, or near, the rotation axis of the support structure 101. If a linear actuator 106 is used, the drive may be provided away from the rotation axis of the support structure 101, so as to provide a greater moment arm. The linear actuator 106 may be located rearwards of the rotation axis of the support structure 101. The linear actuator 106 may be partially in the incoming flow 110. Both, or one of, the motor 104 and the actuator 106 may be used.

Alternatively, or in addition, the actuation of the support structure 101 may be passive. The aerodynamic device 100 may be arranged such that the incoming flow 110 causes an air pressure force on the aerodynamic bodies 102a, 102b, 102c. The air pressure force on the aerodynamic bodies 102a, 102b, 102c may cause the aerodynamic bodies 102a, 102b, 102c, and attached support structure 101, to move. For example, as the velocity of the vehicle increases, and the incoming airflow 110 velocity increases, the aerodynamic device 100 may deploy. A biasing means, such as a spring, may act against the pressure force to revert the aerodynamic bodies 102a, 102b, 102c to the previous configuration, should the pressure force reduce.

The aerodynamic bodies 102a, 102b, 102c may be spaced from the mounting zone by the support structure 101. As shown in Figures 1a-b, the legs 101a, 101b, 101c space the aerodynamic bodies 102a, 102b, 102c from the joint 103. For example, the aerodynamic bodies 102a, 102b, 102c may be spaced from the mounting zone by at least 10mm, 25mm, 50mm, 100mm, 200mm, 300mm, 400mm, 500mm, or 1000mm. Preferably by 100mm. The aerodynamic bodies 102a, 102b, 102c may comprise a collective chord. The collective chord may be the distance between the leading edge of the most forward aerodynamic body 102a to the trailing edge of the most rearward aerodynamic body 102c. The aerodynamic bodies 102a, 102b, 102c may be spaced from the mounting zone based on a ratio of the spacing distance to the collective chord. The ratio may be between 1:1 and 1:10. Preferably, the ratio is between 1:4 and 1:6. More preferably, the ratio is 1:5. For example, if the collective chord is 500mm, the spacing distance is 100mm.

By spacing the aerodynamic bodies 102a, 102b, 102c from the joint 103, in the case of rotational actuation, this means that the aerodynamic bodies 102a, 102b, 102c will rotate about an arc. This may reduce the pitch sensitivity of the aerodynamic device 100. This may make the aerodynamic device 100 easier to control. This may also reduce the likelihood of the aerodynamic bodies 102a, 102b, 102c from stalling. Stalling would make the downstream airflow more difficult to control, such as towards brake and engine cooling. Additionally, spacing the aerodynamic bodies 102a, 102b, 102c from the joint 103 can allow the aerodynamic bodies 102a, 102b, 102c to be in the incoming airflow 110 whilst keeping the driver 104, 105, 106hidden and out of the incoming airflow 110, reducing drag and turbulent airflow. That said, the driver 104, 105, 106 may be exposed, if needed. The driver 104, 105, 106 may be designed so as to have minimal impact on the incoming airflow 110.

One or more of the aerodynamic bodies 102a, 102b, 102c may be fixed to the support structure 101. Alternatively, or in addition, one or more of the aerodynamic bodies 102a, 102b, 102c may be permitted to collectively move and/or individually move. The aerodynamic bodies 102a, 102b, 102c may be permitted to rotate relative to the support structure 101. The aerodynamic bodies 102a, 102b, 102c may be permitted to individually rotate relative to the support structure 101. In this way, it may be possible to individually control the angle of attack of each of the aerodynamic bodies 102a, 102b, 102c. This may be in addition to the control of the combined angle of attack described herein. This may provide further levels control to the aerodynamic device 100. Individually controlling the rotation of each of the aerodynamic bodies 102a, 102b, 102c may allow the guiding of the airflow to be fine-tuned.

The actuation of the rotation of the aerodynamic bodies 102a, 102b, 102c may be active. The aerodynamic device 100 may comprise a further driver configured to actuate the aerodynamic bodies 102a, 102b, 102c. The further driver may provide the rotational movement of the aerodynamic bodies 102a, 102b, 102c. The further driver may comprise a motor. The further driver may comprise a gear system and/or transmission system. The gear system and/or transmission system may transfer the rotational drive of the motor into the rotational actuation of the aerodynamic bodies 102a, 102b, 102c. The further driver may be attached to the support structure and/or the vehicle. The further driver may be part of the vehicle. The further driver may be controlled by the vehicle, for example the vehicle control system. The further driver may be kept out of the incoming flow 110 to improve aerodynamics. Alternatively, the further driver may be a further actuator, such a linear actuator, such as described herein with reference to the actuator 106 for the support structure.

Alternatively, or in addition, the actuation of the rotation of the aerodynamic bodies 102a, 102b, 102c may be passive. The aerodynamic device 100 may be arranged such that the incoming flow 110 causes an air pressure force on the aerodynamic bodies 102a, 102b, 102c. The air pressure force on the aerodynamic bodies 102a, 102b, 102c may cause the aerodynamic bodies 102a, 102b, 102c to rotate. For example, as the velocity of the vehicle increases, and the incoming airflow 110 velocity increases, the aerodynamic bodies 102a, 102b, 102c may deploy. A biasing means, such as a spring, may act against the pressure force to revert the aerodynamic bodies 102a, 102b, 102c to the previous configuration, should the pressure force reduce.

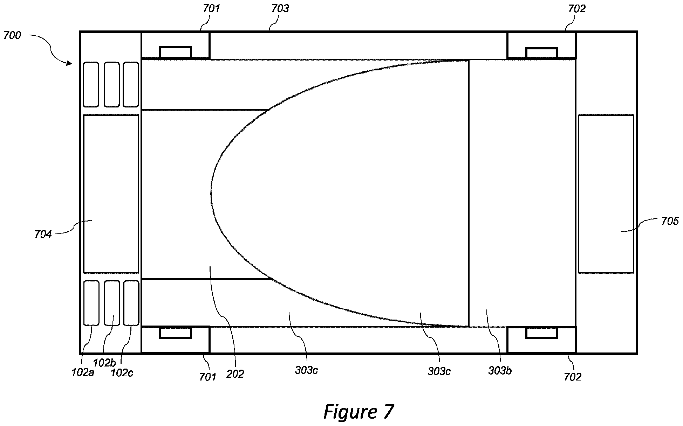

The aerodynamic device 100 described herein may be implemented on a vehicle, such as a car. In particular, the aerodynamic device 100 may be implemented on a sports car or racing car in which there are requirements for improved aerodynamics. A vehicle may comprise the aerodynamic device 100 described herein. Figure 7 illustrates the aerodynamic device 100 fitted to a vehicle 700.

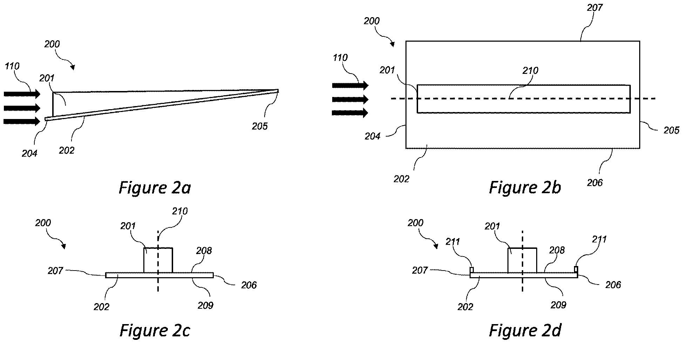

Figures 2a-d illustrate a second aerodynamic device 200. The aerodynamic device 200 may comprise a mounting structure 201. The aerodynamic device 200 may comprise an aerodynamic body 202. The aerodynamic device 200 may receive an incoming airflow 110. The incoming airflow 110 may be a result of the vehicle, on which the aerodynamic device 200 is fitted, travelling at a certain velocity. The incoming airflow 110 may have the same velocity as the vehicle. The incoming airflow 110 may have a higher or lower velocity than the vehicle proximal to the aerodynamic device 200 due to local velocity changes from the aerodynamic body 202.

The aerodynamic device 200 may comprise a single aerodynamic body 202. Figures 2a-d show one aerodynamic body 202. A different number of aerodynamic bodies 202 may be provided. The number of aerodynamic bodies 202 may be dependent on the airflow guiding requirements for the aerodynamic device 200. The aerodynamic body 202 may provide independent airflow guidance.

The incoming airflow 110 may pass over the aerodynamic body 202. The incoming airflow 110 may pass over different aerodynamic bodies on the vehicle before passing over the aerodynamic body 202. For example, the incoming airflow 110 may pass over one or more of the aerodynamic bodies 102a, 102b, 102c shown in Figures 1a-c before passing over the aerodynamic body 202.

The aerodynamic body 202 may comprise a leading edge 204, a trailing edge 205 and at least two outboard edges 206, 207. The aerodynamic body 202 may comprise a generally square or rectangular plan shape when viewed from above. The aerodynamic body 202 may comprise an aerofoil cross section when viewed from the side. In this way, the aerodynamic body 202 may provide lift and/or downforce, depending on their configuration. The aerofoil cross section may comprise non-zero chamber. This may provide a bias towards lift or downforce in a neutral configuration of the aerofoil. The aerodynamic body 202 may comprise a planar shape. In other words, the aerodynamic body 202 may be much longer and/or wider than it is thick.

This may provide a large area for guiding the airflow. The aerodynamic body 202 may comprise a thin sheet. In other words, the aerodynamic body 202 may generally form a flat surface. This may be simpler to manufacture. The aerodynamic body 202 may comprise a planform shape. In other words, when viewed from above, the aerodynamic body 202 may taper towards the outboard edges. The aerodynamic body 202 may comprise a fin, wing, splitter or diffuser.

The aerodynamic body 202 may be attached to the mounting structure 201. The aerodynamic body 202 may be directly attached to the mounting structure 201. The mounting structure 201 may form part of the aerodynamic body 202.

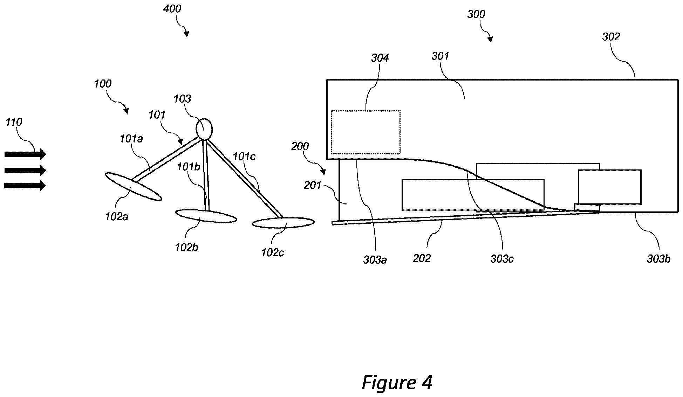

The mounting structure 201 may be mountable to the vehicle. The aerodynamic body 202 may be mountable to the vehicle by means of the mounting structure 201. The mounting structure 201 may be fixedly mountable to the vehicle. The mounting structure 201 may be mountable to the vehicle at a mounting zone. The mounting zone may be located on the underside of the vehicle. In a particular example, as shown in Figures 4-6, the mounting structure 201 may be mountable to a chassis of the vehicle. The mounting structure 201 may be mountable to the underside of a chassis of a vehicle. The mounting structure 201 may be mounted to the vehicle.

The mounting zone may be located between the front and rear axels of the vehicle. The mounting zone may be located between the front and rear wheels of the vehicle. The mounting zone may be located such that the aerodynamic body 202 is at least partially located between the front and rear wheels of the vehicle. The mounting zone may be located such that the aerodynamic body 202 is at least wholly located between the front and rear wheels of the vehicle. Locating the aerodynamic body 202 between the wheels can enable locating near the centre of the vehicle with respect to the length of the vehicle. Locating the aerodynamic body 202 near the centre of the vehicle can provide airflow guiding at the centre underside of the vehicle. This may reduce the pitch sensitivity of the vehicle, allowing easier control of the aerodynamics.

The mounting structure 201 may be located wholly inboard of the outboard edges 206, 207 of the aerodynamic body 202. In other words, the mounting structure 201 may be spaced form the outboard edges 206, 207 of the aerodynamic body 202. In this way, the airflow over the outboard edges 206, 207 of the aerodynamic body 202 may not be impeded by the mounting structure 201. As such, secondary vortices 602 may be generated off the outboard edges 206, 207 of the aerodynamic body 202. As shown in Figures 2b-d, there may be space on the upper surface 208 of the aerodynamic body 202 between the outboard edges 206, 207 and the mounting structure 201. The mounting structure 201 may intersect with a centre line 210 of the aerodynamic body 202. The mounting structure 201 may be centred between the outboard edges 206, 207. The mounting structure 201 may be located in the centre of the aerodynamic body 201.

The mounting structure 201 may comprise a member projecting away from the aerodynamic body 202. The member may project away from an upper surface 208 of the aerodynamic body 202. The member may project towards the underside of the vehicle, or the underside of the chassis, to which the member is attached. The mounting structure 201 may comprise more than one member. The mounting structure 201 may be formed of a plurality of braces which hold the aerodynamic body 202 to the mounting zone. The mounting structure 201 may be designed so as to reduce the impedance on the incoming airflow 110. The mounting structure 201 may comprise a fin shape so that the thinner side faces the flow. The airflow may pass on either side of the mounting structure 201. The mounting structure 201 may have a front edge which is formed so as to aim to reduce turbulent flow, such as a rounded front edge. The member may extend along at least partly of the length of the aerodynamic body 202, as shown in Figures 2a-b. The member may have a shape adapted to fit with the shape of the underside of the vehicle, or the underside of the chassis, to which the member is attached - this is illustrated in Figure 4. The member may space the aerodynamic body 202 from the underside of the vehicle, or the underside of the chassis, to which the member is attached. The member may create a void for airflow to pass over and be guided by the aerodynamic body 202. The member may be formed so as to guide the airflow. The member may be formed so as to guide the airflow to either side of the member and away from the centre of the vehicle. The member may comprise a greater width at the rear than the front, so that airflow is pushed to the sides of the vehicle. This may also push tyre wake down the sides of the vehicle.

In addition to the member of the mounting structure 201, there may be further means for attaching the aerodynamic body 204. The trailing edge 205 of the aerodynamic body 202 may be fixable to the underside of the vehicle, or the underside of the chassis. The mounting structure 201 may be provided by the trailing edge 205 being fixed to the underside of the vehicle, or the underside of the chassis. The airflow may pass over the upper surface 208 of the aerodynamic body 202 to the trailing edge 205 and be pushed to the sides of the vehicle by the underside of the vehicle, or the underside of the chassis. The underside of the vehicle, or the underside of the chassis, may be shaped so as to push the airflow to the sides of the vehicle.

The aerodynamic body 202 may be angled downwards with respect to the vehicle, or chassis, to which it is attached. The aerodynamic body 202 may be angled downwards with respect to the incoming airflow 110. The leading edge 204 of the aerodynamic body 202 may be lower than the trailing edge 204 of the aerodynamic body 202. This may cause the aerodynamic body 202 to produce downforce. Alternatively, the aerodynamic body 202 may be angled upwards with respect to the vehicle, or chassis, to which it is attached. The aerodynamic body 202 may be angled upwards with respect to the incoming airflow 110. The leading edge 204 of the aerodynamic body 202 may be higher than the trailing edge 204 of the aerodynamic body 202. This may cause the aerodynamic body 202 to produce lift.

The aerodynamic body 202 may be spaced from the mounting zone by the mounting structure 202. As shown in Figure 4, at least part of the aerodynamic body 202 is spaced from the mounting zone. For example, the aerodynamic body 202 may be spaced from the mounting zone by at least 50mm, 100mm, 200mm, 300mm, 400mm, 500mm, or 1000mm. Preferably by 500mm. In an implementation in which the aerodynamic body 202 is angled, and/or the trailing edge 205 is attached to the mounting zone, the spacing measurements may be applied to the free edge, in this example the leading edge 204, of the aerodynamic body 202.

The outboard edges 206, 207 of the aerodynamic body 202 may predominately be free to the incoming airflow 110 to the vehicle. The outboard edges 206, 207 of the aerodynamic body 202 may entirely be free to the incoming airflow 110 to the vehicle. There may be no further components blocking the outboard edges 206, 207 of the aerodynamic body 202. In particular, the mounting structure 201 may not imped the incoming airflow 110 over the outboard edges 206, 207.

The incoming airflow 110 may cause secondary vortices 602 to be generated off the outboard edges 206, 207 of the aerodynamic body 202. The airflow may fall off the outboard edges 206, 207 of the aerodynamic body 202 generating secondary vortices 602. The secondary vortices 602 may continue downstream rearwards of the aerodynamic body 202. Figure 6 illustrates how the secondary vortices 602 may be formed. The secondary vortices 602 may continue downstream and away from the sides of the vehicle. This may reduce the turbulent airflow under the vehicle, improving the guiding of the airflow. This may also push tyre wake down the sides of the vehicle.

The aerodynamic body 202 may further comprise features for helping to induce the secondary vortices 602. The aerodynamic body 202 may further comprise vortex generators 211. The vortex generators 211 may be located at, or near, the outboard edges 206, 207 of the aerodynamic body 202. The vortex generators 211 be arranged to induce turbulent flow at, or near, the outboard edges 206, 207 of the aerodynamic body 202. The turbulent flow at, or near, the outboard edges 206, 207 of the aerodynamic body 202 may increase the force of the secondary vortices 602 being generated at the outboard edges 206, 207 of the aerodynamic body 202. The vortex generators 211 may induce turbulent flow by impeding the incoming airflow 110. The vortex generators 211 may also be fitted to the aerodynamic bodies 102a, 102b, 102c shown in Figures 1a-c.

The vortex generators 211 may comprise a protrusion extending from the aerodynamic body 202. As shown in Figure 2d, the protrusion may extend from a topside 208 of the aerodynamic body 202. Alternatively, or in addition, the protrusion may extend from an underside 209 of the aerodynamic body 202. The protrusion may extend from, or near, the outboard edges 206, 207 of the aerodynamic body 202. The vortex generators 211 may be located along at least part of the length of the outboard edges 206, 207 of the aerodynamic body 202. The vortex generators 211 may be located along the entire length of the outboard edges 206, 207 of the aerodynamic body 202. The vortex generators 211 may be spaced apart along the outboard edges 206, 207 of the aerodynamic body 202. The protrusions may form domes, spikes, fins etc. The protrusions may form a rectangular cross section facing the flow. The protrusions may form a domed cross section facing the flow. The protrusions may form a gothic, rectangular, parabolic, triangular, and/or ogive cross sections orthogonal to the flow. The vortex generators 211 may comprise louvered bodies. As the airflow passes over subsequent vortex generators down the outboard edges 206, 207 the secondary vortex 602 may progressively grow.

The aerodynamic device 200 described herein may be implemented on a vehicle, such as a car. In particular, the aerodynamic device 200 may be implemented on a sports car or racing car in which there are requirements for improved aerodynamics. A vehicle may comprise the aerodynamic device 200 described herein. Figure 7 illustrates the aerodynamic device 200 fitted to a vehicle 700.

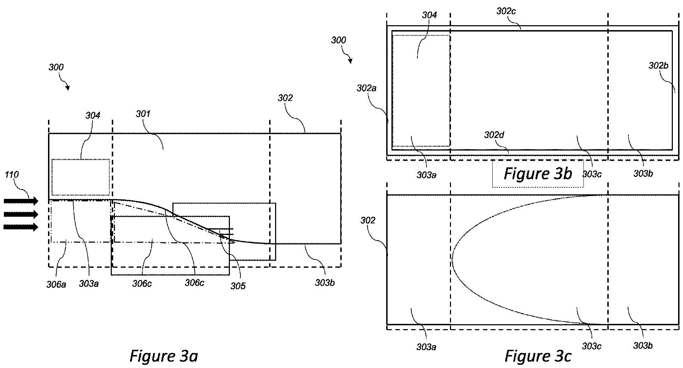

Figures 3a-c illustrate an aerodynamic chassis 300. The chassis 300 may comprise a main compartment 301. Main compartment 301 may form the structure of the sides and base of the vehicle. The driver cockpit may be located within the main compartment 301. The seats, steering controls, and pedal footbox 304 may be located within the main compartment 301.

The main compartment 301 may be bounded by a plurality of walls 302 and a floor 303 extending between the walls 302. The walls 302 may comprise a front wall 302a, a rear wall 302b, a first side wall 302c, and/or a second side wall 302d. The floor 303 may extend between the walls 302 and seal the base of the walls 302.

The aerodynamic chassis 300 may receive an incoming airflow 110. The front wall 302a may face the incoming flow 110. The incoming airflow 110 may be a result of the vehicle, on which the aerodynamic chassis 300 is fitted, travelling at a certain velocity. The incoming airflow 110 may have the same velocity as the vehicle. The incoming airflow 110 may have a higher or lower velocity than the vehicle proximal to the aerodynamic chassis 300 due to local velocity changes.

The incoming airflow 110 may pass over the aerodynamic chassis 300. The incoming airflow 110 may pass over different aerodynamic bodies on the vehicle before passing over the aerodynamic chassis 300. For example, the incoming airflow 110 may pass over one or more of the aerodynamic bodies 102a, 102b, 102c shown in Figures 1a-c, and/or the aerodynamic body 202 shown in Figures 2a-d, before passing over the aerodynamic chassis 300.

The floor 303 may comprise a first region 303a. The floor 303 may comprise a second region 303b. The second region 303b may be located rearwards of the first region 303a. Put another way, the second region 303b may be further backwards in the chassis 300 than the first region 303a. The first region 303a may be closer to the front wall 302a than the second region 303b. The second region 303b may be closer to the rear wall 302b than the first region 303a. The first region 303a may be adjacent to the front wall 302a. The second region 303b may be adjacent to the rear wall 302b. The first region 303a may butt up to the front wall 302a. The second region 303b may butt up to the rear wall 302b.

The second region 303b may be located lower than the first region 303a. Put another way, the second region 303b may be lower in the chassis 300 in a direction towards the floor 303 than the first region 303a. The first region 303a may be closer to the top of the walls 302 than the second region 303b. The rear wall 302b may extend lower than the front wall 302a. The first region 303a being higher than the second region 303b thereby forms a void 306a under an underside of the first region 303a. The void 306a may be formed in the space that would otherwise be inside the compartment 301 if the first region 303a and the second region 303b were at the same height. The void 306a may provide space for airflow to be guided under the chassis 300. For example, an aerodynamic device may be mounted in the void 306a for guiding the airflow. The aerodynamic device may be the aerodynamic device 200 shown in Figures 2a-d. The void 306a may also provide space for generating a negative pressure gradient under the vehicle so as to generate downforce.

The first region 303a may be narrower than the second region 303b. The first region 303a may extend less distance across the width of the vehicle than the second region 303b. The sides of the first region 303a may be located inboard of the sides of the second region 303b. In this way, the airflow may be pushed outboard away from the chassis 300 as it travels rearwards through the vehicle.

The pedal footbox 304 of the vehicle may be located in the main compartment 301. The pedal footbox 304 may be located towards the front of the main compartment 301. The seat may be located towards the rear of the main compartment 301. In this way, the driver's feet may be positioned in the pedal footbox 304 towards the front of the main compartment 301. The pedal footbox 304 may comprise a pedal compartment for receiving a plurality of pedals. The pedal footbox 304 may comprise the pedals. The plurality of pedals comprises one or more of: a throttle pedal; a clutch pedal and a brake pedal. The chassis 300 may comprise the pedal footbox 304. The pedal footbox 304 may be mounted to the floor 303 of the main compartment 301. The pedal footbox 304 may be located on a topside of the first region 303a of the floor. The pedal footbox 304 may be fitted to the topside of the first region 303a.

The first region 303a may be located at least partially under the pedal footbox 304 of the vehicle. At least part of the pedal footbox 304 may be located in a space above first region 303a. At least part of the pedal footbox 304 and the first region 303a may be vertically aligned. The pedal footbox 304 may be located wholly above the first region 303a. The whole of the pedal footbox 304 may be located in a space above first region 303a. The entire pedal footbox 304 may be vertically aligned within the first region 303a. Put another way, the perimeter of the first region 303a may define a vertical column above the first region 303a. The pedal footbox 304 may be located wholly, or partially, within the vertical column defined by the perimeter above the first region 303a.

The first region 303a may be generally flat. This is illustrated in Figure 3a. The first region 303a may be flat. The first region 303a may be in a plane perpendicular to one or more of the walls 302. The first region 303a may be in a plane perpendicular to the front wall 302a. The first region 303a may be in a plane perpendicular to all the walls 302. The first region 303a may be at least partially flat. At least part of the first region 303a may be located in the plane. The first region 303a may comprise a lip around part of the edge where the first region 303a of the floor connects to the walls 302. This may be due to the way the chassis 300 is manufactured. The first region 303a may instead be in a plane that is angled to one or more of the walls 303a. For example, the first region 303a may be angled upwards at the front to downwards at the back.

The second region 303b may be generally flat. This is illustrated in Figure 3a. The second region 303b may be flat. The second region 303b may be in a plane perpendicular to one or more of the walls 302. The second region 303b may be in a plane perpendicular to the rear wall 303b. The second region 303b may be in a plane perpendicular to all the walls 302. The second region 303b may be at least partially flat. At least part of the second region 303b may be located in the plane. The second region 303b may comprise a lip around part of the edge where the second region 303b of the floor connects to the walls 302. This may be due to the way the chassis 300 is manufactured. The second region 303b may instead be in a plane that is angled to one or more of the walls 303a. For example, the second region 303b may be angled downwards at the front to upwards at the back.

The floor 303 may further comprise a third region 306c. The third region 306c may be located between the first region 306a and the second region 306b. The third region 306c may join the first region 306a to the second region 306b. The third region 306c joining the first region 306a to the second region 306b may thereby form a further void 306c under an underside of the third region 306c. The further void 306c may be formed in the space that would otherwise be inside the compartment 301 if the first region 303a, the second region 303b, and the third region 303c were at the same height. The further void 306c may provide space for airflow to be guided under the chassis. For example, an aerodynamic device may be mounted in the further void 306c for guiding the airflow. The aerodynamic device may be the aerodynamic device 200 shown in Figures 2a-d. The void 306c may also provide space for generating a negative pressure gradient under the vehicle so as to generate downforce.

The third region 303c may be lower than the first region 306a. The third region 303c may be higher than the second region 303b. The third region 303c may fill the floor between the higher first region 303a and the lower second region 303b. The underside of the third region 303c may be at an angle to the underside of the first region 303c. The underside of the third region 303c may project downwards at an angle from the underside of the first region 303a. The underside of the third region 303c may be at an angle to the underside of the second region 303b. The underside of the third region 303c may project upwards at an angle from the underside of the region second region 303b. The angle of the third region 303c between the first region 303a and the second region 303b may not be constant.

The angle of the third region 303c between the first region 303a and the second region 303b may vary along the length of the third region 303c. The steepness of the third region 303c, along the length of the third region 303c, between the first region 303a and the second region 303b may gradually decrease. Put another way, the third region 303c may be close to vertical at the front and close to horizontal at the rear, with respect to the chassis 300. The underside of the third region 303 may generally have a bow shaped cross section when viewed from the side. This is illustrated in Figure 3a.

The angle of the third region 303c between the first region 303a and the second region 303b may vary across the width of the third region 303c. The steepness of the third region 303c, across the width of the third region 303c, may be steeper at the sides and shallower in the middle. The third region 303c may be close to vertical at the sides of the third region 303c and close to horizontal at the middle. The underside of the third region 303 may generally have a bow shaped cross section when viewed from the front. This is illustrated in Figure 3a.

As described herein, the first region 303a may be narrower than the second region 303b. The third region 303c may extend between the first region 303a and the second region 303b. The sides of the third region 303c may progressively extend outboard rearwards in the vehicle. In this way, the airflow may be pushed outboard away from the chassis 300 by the third region 303a as it travels rearwards through the vehicle.

The combination of the varied angle along the length, and across the width, of the third region 303c may provide a bow shape. The incoming airflow 110 may be pushed downwards and to the sides of the vehicle by the bow shaped third region 303c. This may reduce the turbulent airflow under the vehicle, improving the guiding of the airflow. This may also push tyre wake down the sides of the vehicle.

Alternatively, the third region 303c may be generally flat. The third region 303c may be flat. The third region 303c may be in a plane that is angled to one or more of the walls 303a. For example, the third region 303c may be angled upwards at the front to downwards at the back. At least part of the third region 303c may be located in the plane. The third region 303c may comprise a lip around part of the edge where the first region 303a of the floor connects to the walls 302. This may be due to the way the chassis 300 is manufactured.

The third region 303c may be located at least partially under the pedal footbox 304 of the vehicle. At least part of the pedal footbox 304 may be located in a space above third region 303c. At least part of the pedal footbox 304 and the third region 303c may be vertically aligned. Put another way, the perimeter of the third region 303c may define a vertical column above the first region 303a. The pedal footbox 304 may be located at least partially within the vertical column defined by the perimeter above the third region 303c.

The floor 303 may comprise a constant thickness. In which case, the shape of the underside of the floor 303 may be mirrored by the shape of the underside of the floor 303. Alternatively, the floor 303 may not comprise a constant thickness. The shape of the underside of the floor 303, such as the bow shape, may be provided while still having a flat topside of the floor 303.

The aerodynamic chassis may further comprise an inlet 305. The inlet 305 may be located in the floor 303. The inlet 305 may be an engine cooling inlet 305. The inlet 305 may be an air conditioning inlet 305. The inlet 305 may be located in the third region of the floor 306c. The inlet 305 may be fluidically coupled to a cooling system.

The cooling system may be an engine radiator and/or an air conditioning system. The incoming airflow 110 may pass into the inlet 305 and be used to cool parts of the vehicle. The incoming airflow 110 may pass into the inlet and be used to provide a positive pressure gradient to the engine bar, which can avoid recirculation of hot bulk air forward in the vehicle. The inlet 305 may be connected to pipework which takes the cooler incoming airflow 110 to the parts of the vehicle.

Alternatively, the inlet 305 may be an air guiding inlet 305. The inlet 305 may guide air through the vehicle to the rear of the vehicle. The inlet 305 may guide air through pipework in the vehicle to the rear of the vehicle. The vehicle may comprise rear aerodynamic devices, such as a rear diffuser, rear wing, and/or rear outlet. The inlet 305 may guide airflow to one or more of the rear aerodynamic devices of the vehicle. The vehicle may comprise powertrain ancillary components such a fuel tank and/or a battery module. The inlet 305 may guide airflow to the powertrain ancillary components to provide cooling to the powertrain ancillaries components.

The aerodynamic chassis 300 may be a monocoque chassis 300. The monocoque chassis 300 may be made from composite material. The composite material may comprise one or more of: Metal Matrix Composites (MMCs), Polymer Matrix Composites (PMCs), Glass Fiber Reinforced Polymers (GFRPs), and Carbon Fiber Reinforced Polymers (CFRPs). The walls 302 and/or the floor 303 may be made from composite material. The walls 302 and the floor 303 may be formed from single piece of composite material.

The chassis 300 described herein may be implemented on a vehicle, such as a car. In particular, the chassis 300 may be implemented on a sports car or racing car in which there are requirements for improved aerodynamics. A vehicle may comprise the chassis 300 described herein. Figure 7 illustrates the chassis 300 fitted to a vehicle 700.

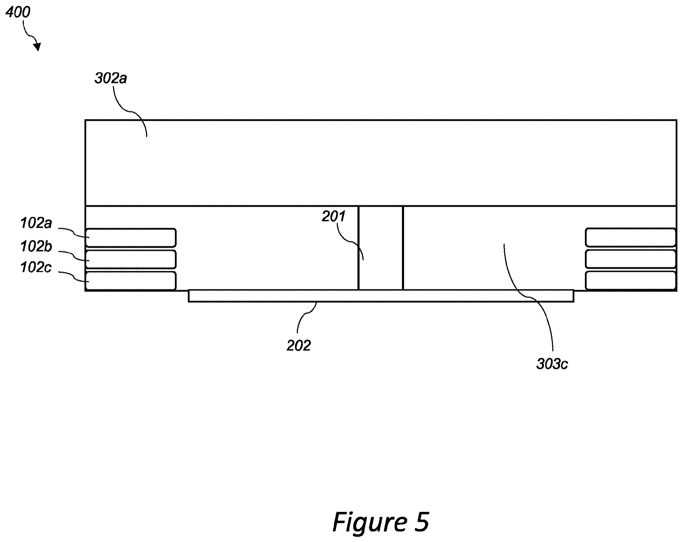

Figures 4 and 5 show an aerodynamic system 400. The aerodynamic system 400 may comprise one or more of the first aerodynamic device 100 of Figures 1a-b, the second aerodynamic device 200 of Figures 2a-d, and the aerodynamic chassis 300 of Figures 3a-c.

The first aerodynamic device 100 may be located forwards of the second aerodynamic device 200. The aerodynamic bodies 102a, 102b, 102c may be located forwards of the further aerodynamic body 202. The incoming airflow 110 may pass over one of more of the aerodynamic bodies 102a, 102b, 102c. The airflow may then pass from one or more of the aerodynamic bodies 102a, 102b, 102c to the further aerodynamic body 202.

The further aerodynamic body 202 may not be directly attached to the support structure 101. The aerodynamic bodies 102a, 102b, 102c may be attached to the support structure 101, directly or indirectly. The support structure 101 may be attached to the vehicle, directly or indirectly. The further aerodynamic body 202 may be attached to the mounting structure 101, directly or indirectly. The mounting structure 101 may be attached to the vehicle or chassis 303, directly or indirectly. Further intermediate part(s) of the vehicle may be between the further aerodynamic body 202 and the support structure 101.

As shown in Figure 5, the aerodynamic bodies 102a, 102b, 102c may be located outboard of the further aerodynamic body 202. In other words, the aerodynamic bodies 102a, 102b, 102c may be aligned outboard of the further aerodynamic body 202, but not necessarily aligned with the further aerodynamic body with respect to the length of the vehicle. There may be a gap between the aerodynamic bodies 102a, 102b, 102c and the further aerodynamic body 202 when viewed from the front. The further aerodynamic body 202 may be spaced inboard of the aerodynamic bodies 102a, 102b, 102c.

The system 400 may comprise a plurality of first aerodynamic devices 100. A first aerodynamic device 100 may be located on a first side of the vehicle and a first aerodynamic device 100 may be located on a second side of the vehicle (as shown in Figure 5).

The aerodynamic bodies 102a, 102b, 102c of each of the first aerodynamic devices 100 may be located outboard of the further aerodynamic body 202. In other words, the aerodynamic bodies 102a, 102b, 102c of each of the first aerodynamic devices 100 may be aligned outboard of the further aerodynamic body 202, but not necessarily aligned with the front wheels 701 with respect to the length of the vehicle. There may be a gap between the aerodynamic bodies 102a, 102b, 102c of each of the first aerodynamic devices 100 and the further aerodynamic body 202 when viewed from the front. The further aerodynamic body 202 may be spaced inboard of the aerodynamic bodies 102a, 102b, 102c of each of the first aerodynamic devices 100.

The further aerodynamic body 202 may be mountable to the vehicle or chassis 300. The further aerodynamic body 202 may be mounted to the vehicle or chassis 300. Figures 4 and 5 show the further aerodynamic body 202 being mounted to the chassis 300. The further aerodynamic body 202 may be mounted to the floor 303 of the chassis. The further aerodynamic body 202 may be at least partially located in the void 306a under the underside of the first region 303a of the floor. The further aerodynamic body 202 may be at least partially located in the further void 306c under the underside of the third region 303c of the floor. In this way, the further aerodynamic body 202 may provide airflow guiding under the chassis 300. The further aerodynamic body 202 may be spaced from and under the underside of the first region 303c. The further aerodynamic body 202 may be spaced from and under the underside of the third region 303c. In this way, there may be a space between the further aerodynamic body 202 and the floor 303, which may provide further airflow guiding under the chassis 300.

The further aerodynamic body 202 may be mountable to the underside of the floor 303 by the mounting structure 201. The further aerodynamic body 202 may be mounted to the underside of the floor 303 by the mounting structure 201. The mounting structure 201 may be mounted to the underside of the first region 303a and/or the third region 303c. The further aerodynamic body 202 itself may also be mountable to the underside of the floor 303. The further aerodynamic body 202 itself may also be mounted to the underside of the floor 303. The trailing edge 205 of the further aerodynamic body 202 may be mounted to the underside of the floor 303. The trailing edge 205 of the further aerodynamic body 202 may be mounted to the underside of the third region 303c.

As shown in Figure 5, the further aerodynamic body 202 may be narrower than the chassis 300, in particular the front wall 204 of the chassis 300. The further aerodynamic body 202 may instead be the same width as the chassis 300, in particular the front wall 204 of the chassis 300.

Figure 6 illustrates the airflow over the aerodynamic system 400.

The incoming airflow 110 may first be received by one or more first aerodynamic devices 100. The airflow may be guided over the upper and lower surfaces of the aerodynamic bodies 102a, 102b, 102c. The majority of the airflow over the aerodynamic bodies 102a, 102b, 102c may be guided from the leading edge, over the upper and lower surface, to the trailing edge.

However, some of the airflow over the aerodynamic bodies 102a, 102b, 102c may fall off the outboard sides of the aerodynamic bodies 102a, 102b, 102c. The airflow may fall upwards or downwards depending on the attack angle of the aerodynamic bodies 102a, 102b, 102c. Figures 6 illustrates the aerodynamic bodies 102a, 102b, 102c in a downforce configuration in which the airflow falls down the outboard edges of the aerodynamic bodies 102a, 102b, 102c. The airflow falling off the outboard edges may form primary vortices 601. The primary vortices 601 may continue to travel down the outboard edges of the aerodynamic bodies 102a, 102b, 102c and beyond the aerodynamic bodies 102a, 102b, 102c.

The incoming airflow 110 closer to the centreline of the vehicle may pass the sides of the aerodynamic bodies 102a, 102b, 102c and not pass over the aerodynamic bodies 102a, 102b, 102c. This airflow may first be received by the second aerodynamic device 200. Alternatively, if a front wing is present 704 (see Figure 7), the airflow may be received by the front wing 704 before the second aerodynamic device 202. The airflow may be guided over the upper 208 and lower 209 surfaces of the further aerodynamic body 202. The majority of the airflow over the further aerodynamic body 202 may be guided from the leading edge 204, over the upper 208 and lower 209 surface, to the trailing edge 205. If the trailing edge 205 is mounted to the floor 303 of the chassis 300, then the airflow may be pushed downwards and out of the sides of the further aerodynamic body 202 by the floor 303 of the chassis 300. This may also push tyre wake down the sides of the vehicle.

However, some of the airflow over the further aerodynamic body 202 may fall off the outboard sides 206, 207 of the further aerodynamic body 202. The airflow may fall upwards or downwards depending on the attack angle of the further aerodynamic body 202. Figures 6 illustrates the further aerodynamic body 202 in a downforce configuration in which the airflow falls down the outboard edges 206, 207 of the further aerodynamic body 202. The airflow falling off the outboard edges 206, 207 may form secondary vortices 602. The secondary vortices 602 may continue to travel down the outboard edges 206, 207 of the further aerodynamic body 202 and beyond the further aerodynamic body 202.

The primary vortices 601 and the secondary vortices 602 may interact with one another. The primary vortices 601 may continue beyond the aerodynamic bodies 102a, 102b, 102c and into the path of the secondary vortices 602 beside the further aerodynamic body 202. As shown in the zoom-in in Figure 6, at least part of the primary vortices 601 and at least part of the secondary vortices 602 may be counterrotating. At least part of the primary vortices 601 and at least part of the secondary vortices 602 may be offset. The vortices 601, 602 may be counterrotating, and offset, in the gap seen from the front between the aerodynamic bodies 102a, 102b, 102c and the further aerodynamic body 202. This addition of the primary vortices 601 to the secondary vortices 602 may add further force, velocity and/or momentum to the secondary vortices 602. This may be because the primary vortices 601 and the secondary vortices 602 may be traveling in the same direction at the point at which the primary vortices 601 and the secondary vortices 602 interact. This is illustrated in the zoom-in in Figure 6. As the secondary vortices 602 have a higher force, velocity and/or momentum, due to the addition from the primary vortices 601, this may have a stronger effect on the guiding of the airflow. This may more strongly guide the airflow down the sides of the vehicle. This may also push tyre wake down the sides of the vehicle.

Primary vortices 601 and secondary vortices 602 are names which define the vortices formed by the first aerodynamic device 100 and the second aerodynamic device 200 respectively.

Figure 7 show an example vehicle 700 with the aerodynamic system 400 implemented. The aerodynamic system 400 on the vehicle 700 may comprise one or more of the first aerodynamic device 100 of Figures 1a-b, the second aerodynamic device 200 of Figures 2a-d, and the aerodynamic chassis 300 of Figures 3a-c.

The vehicle 700 may comprise a pair of front wheels 701. The vehicle 700 may comprise a pair of rear wheels 702. The pair of front wheels 701 and/or the pair of rear wheels 702 may be driven. The wheels 701, 702 may be driven by a combustion engine and/or one or more electric motors. The wheels 701, 702 may be located inboard of bodywork 703 of the vehicle 700. The bodywork of the 703 may define the outer perimeter of the vehicle 700.

As shown in Figure 7, the aerodynamic bodies 102a, 102b, 102c may be located inboard of the front wheels 701. In other words, the aerodynamic bodies 102a, 102b, 102c may be aligned inboard of the front wheels 701, but not necessarily aligned with the front wheels 701 with respect to the length of the vehicle. The aerodynamic bodies 102a, 102b, 102c may be located forward of the front wheels 701. In this way, the airflow over the aerodynamic bodies 102a, 102b, 102c may pass beside and past the inboard side of the front wheels 701. There may be a gap between the aerodynamic bodies 102a, 102b, 102c and the front wheels when viewed from the front. The aerodynamic bodies 102a, 102b, 102c may be spaced inboard of the front wheels 701. In this way, the airflow over the aerodynamic bodies 102a, 102b, 102c may pass beside and past the inboard side of the front wheels 701, clear with minimal interference from the front wheels 701.

The system 400 may comprise a plurality of first aerodynamic devices 100. A first aerodynamic device 100 may be located on a first side of the vehicle and a first aerodynamic device 100 may be located on a second side of the vehicle (as shown in Figure 7). The aerodynamic bodies 102a, 102b, 102c of each of the first aerodynamic devices 100 may be located inboard of respective front wheels 701. In other words, the aerodynamic bodies 102a, 102b, 102c of each of the first aerodynamic devices 100 may be aligned inboard of respective front wheels 701, but not necessarily aligned with the front wheels 701 with respect to the length of the vehicle. The aerodynamic bodies 102a, 102b, 102c may be located forward of the respective front wheels 701. In this way, the airflow over the aerodynamic bodies 102a, 102b, 102c may pass beside and past the inboard side of the respective front wheels 701. One first aerodynamic device 100 may be located inside the front left wheel, and another first aerodynamic device 100 may be located inside the front right wheel. There may be a gap between the aerodynamic bodies 102a, 102b, 102c of each of the first aerodynamic devices 100 and respective front wheels 701 when viewed from the front. The aerodynamic bodies 102a, 102b, 102c may be spaced inboard of the respective front wheels 701. In this way, the airflow over the aerodynamic bodies 102a, 102b, 102c may pass beside and past the inboard side of the respective front wheels 701, clear with minimal interference from the front wheels 701.

The vehicle 700 may comprise a front wing 704, the first aerodynamic device 100 may be located to a first side of the front wing 704 and the second aerodynamic device 100 may be located to a second side of the front wing 704. In other words, when viewed from the front, the front wing 704 may be central, and the two aerodynamic devices 100 may be either side of the front wing 704. The front wing 704 may be located in front of the further aerodynamic body 202. The front wing 704 may be located in between the two aerodynamic devices 100. The front wing 704 may be fixed. The front wing 704 may be movable relative to the vehicle 700.

The vehicle 700 may comprise rear aerodynamic devices 705, such as a rear diffuser, rear wing, and/or rear outlet. These rear aerodynamic devices 705 may be fixed. These rear aerodynamic devices 705 may be movable relative to the vehicle 700.

The terms "vertical", "horizontal", "forward", "backward", "lower", "higher", "above", "below", "side", "length", "width", "inboard", and "outboard" used herein are used with respect to the forward driving direction of the vehicle 700, and/or the chassis 300 when the vehicle 700 is on a flat, level surface. For example, vertical may be a line normal to the floor of the vehicle 700. Horizontal may be a line parallel to the floor of the vehicle 700. Forward and backward may be directions along the horizontal line. Higher, lower, above, and below, may be positions along the vertical line. The length of the vehicle 700 may be measured between the front and rear of the vehicle 700. The width of the vehicle 700 may be measured between the sides of the vehicle. Inboard may be towards the centre of the vehicle along the horizontal line. Outboard may be towards the sides of the vehicle along the horizontal line.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description, it will be evident to a person skilled in the art that various modifications may be made within the scope of the invention.

### ANNEX

Some numbered statements are provided below, which form part of this disclosure:
1. An aerodynamic device for mounting to a front underside of a vehicle, the device comprising:
   a support structure, the support structure being movably mountable to the vehicle in a mounting zone; and
   a plurality of discrete aerodynamic bodies, each aerodynamic body being attached to the support structure such that actuation of movement of the support structure causes collective movement of the aerodynamic bodies from a first configuration to a second configuration, the first configuration of the aerodynamic bodies having a first combined angle of attack and the second configuration of the aerodynamic bodies having a second combined angle of attack, the first combined angle of attack being different to the second combined angle of attack.
2. The aerodynamic device according to statement 1, wherein the device comprises a joint attached to the support structure, the joint permitting the support structure to move relative to the vehicle.
3. The aerodynamic device according to statement 1 or 2, wherein the support structure is permitted to rotate relative to the vehicle about a mounting axis in the mounting zone such that actuation of movement of the support structure causes collective pitching of the aerodynamic bodies from the first configuration to the second configuration.
4. The aerodynamic device according to any preceding statement, wherein the support structure is permitted to displace relative to the vehicle in the mounting zone such that actuation of movement of the support structure causes collective displacement of the aerodynamic bodies from the first configuration to the second configuration.
5. The aerodynamic device according to any preceding statement, wherein actuation of the support structure is active.
6. The aerodynamic device according to statement 5, wherein the device comprises a driver to actuate the support structure.
7. The aerodynamic device according to statement 6, wherein the driver comprises a motor and a gear system.
8. The aerodynamic device according to any preceding statement, wherein the actuation of the support structure is passive.
9. The aerodynamic device according to statement 8, wherein the device is arranged such that air pressure on aerodynamic bodies from incoming airflow to the vehicle causes a passive actuation of the support structure.
10. The aerodynamic device according to any preceding statement, wherein each of the aerodynamic bodies are spaced from the mounting zone by the support structure.
11. The aerodynamics device according to any preceding statement, wherein each of the aerodynamic bodies are spaced from the mounting zone by at least 100mm.
12. The aerodynamic device according to any preceding statement, wherein each of the aerodynamic bodies are directly attached to the support structure.
13. The aerodynamic device according to any preceding statement, wherein one or more of the aerodynamic bodies are permitted to rotate relative to the support structure.
14. The aerodynamic device according to statement 13, wherein actuation of the rotation of the aerodynamic bodies is active.
15. The aerodynamic device according to statement 13 or 14, wherein actuation of the rotation of the aerodynamic bodies is passive.
16. The aerodynamic device according to any preceding statement, wherein one or more of the aerodynamic bodies are fixed relative to the support structure.
17. The aerodynamic device according to any preceding statement, wherein one or more of the aerodynamic bodies comprise an aerofoil cross section.
18. The aerodynamic device according to any preceding statement, wherein one or more of the aerodynamic bodies comprise a planar shape.
19. The aerodynamic device according to any preceding statement, wherein one or more of the aerodynamic bodies comprises a planform shape.
20. The aerodynamic device according to any preceding statement, wherein one or more of the aerodynamic bodies comprises a fin, wing, splitter or diffuser.
21. The aerodynamic device according to any preceding statement, wherein the first configuration of the aerodynamic bodies has a first downforce and/or drag characteristic, and the second configuration of the aerodynamic bodies has a second downforce and/or drag characteristic, the first downforce and/or drag characteristic being different to the second downforce and/or drag characteristic.
22. The aerodynamic device according to any preceding statement, wherein the device is arranged such that incoming airflow to the vehicle passes from one aerodynamic body to another aerodynamic body.
23. The aerodynamic device according to any preceding statement, wherein each of the aerodynamic bodies comprise a leading edge, a trailing edge, and at least two outboard edges.
24. The aerodynamic device according to statement 23, wherein the device is arranged such that incoming airflow to the vehicle causes primary vortices to be generated off the outboard edges of the aerodynamic bodies.
25. An aerodynamic system comprising the aerodynamic device according to any preceding statement and further comprising a further aerodynamic body for mounting to the underside of the vehicle, the further aerodynamic body being:
   fixedly mountable to the vehicle;
   located rearwards of the aerodynamic bodies such that incoming airflow to the vehicle passes from one or more of the aerodynamic bodies to the further aerodynamic body; and
   not directly attached to the support structure.
26. An aerodynamic system according to statement 25, wherein the further aerodynamic body comprises a leading edge, a trailing edge, and at least two outboard edges.
27. The aerodynamic system according to statement 26, wherein the further aerodynamic body comprises mounting structure by which the further aerodynamic body is fixable to the vehicle, the mounting structure being located wholly inboard of the outboard edges of the further aerodynamic body.
28. The aerodynamic system according to statement 26 or 27, wherein the system is arranged such that incoming airflow to the vehicle causes secondary vortices to be generated off the outboard edges of the further aerodynamic body.
29. The aerodynamic system according to any of statements 28 when dependent on statement 24, wherein the device is arranged such that the at least a portion of the primary vortices and the secondary vortices are counterrotating and offset so that the portion of primary vortices increase the force of the secondary vortices.
30. A vehicle comprising the aerodynamic device of any of statements 1 to 24.
31. A vehicle comprising two aerodynamic devices of any of statements 1 to 24, a first device being located on a first side of the vehicle and a second device being located on a second side of the vehicle.
32. A vehicle according to statement 31, wherein the vehicle further comprises a front wing, the first device being located to a first side of the front wing and a second device being located to a second side of the front wing.
33. A vehicle according to statement 32, wherein the aerodynamic bodies of the first device and the second device are aligned inboard of the front wheels of the vehicle.
34. A vehicle according to any of statements 30 to 33, further comprising the further aerodynamic body of any of statements 25 to 29.
35. A vehicle according to statement 34 when dependent on statement 33, wherein the further aerodynamic device is aligned inboard of the aerodynamic bodies of the first device and the aerodynamic bodies of the second device.

## Claims

1. An aerodynamic device for mounting to a front underside of a vehicle, the device comprising:
a support structure, the support structure being movably mountable to the vehicle in a mounting zone; and
a plurality of discrete aerodynamic bodies, each aerodynamic body being attached to the support structure such that actuation of movement of the support structure causes collective movement of the aerodynamic bodies from a first configuration to a second configuration, the first configuration of the aerodynamic bodies having a first combined angle of attack and the second configuration of the aerodynamic bodies having a second combined angle of attack, the first combined angle of attack being different to the second combined angle of attack.

2. The aerodynamic device according to claim 1, wherein the device comprises a joint attached to the support structure, the joint permitting the support structure to move relative to the vehicle.

3. The aerodynamic device according to claim 1 or 2, wherein the support structure is permitted to rotate relative to the vehicle about a mounting axis in the mounting zone such that actuation of movement of the support structure causes collective pitching of the aerodynamic bodies from the first configuration to the second configuration.

4. The aerodynamic device according to any preceding claim, wherein the support structure is permitted to displace relative to the vehicle in the mounting zone such that actuation of movement of the support structure causes collective displacement of the aerodynamic bodies from the first configuration to the second configuration.

5. The aerodynamic device according to any preceding claim, wherein actuation of the support structure is active and optionally wherein the device comprises a driver to actuate the support structure, the driver comprising a motor and a gear system.

6. The aerodynamic device according to any of claims 1 to 4, wherein the actuation of the support structure is passive and optionally wherein the device is arranged such that air pressure on aerodynamic bodies from incoming airflow to the vehicle causes a passive actuation of the support structure.

7. The aerodynamic device according to any preceding claim, wherein each of the aerodynamic bodies are spaced from the mounting zone by the support structure, optionally by at least 100mm.

8. The aerodynamic device according to any preceding claim, wherein one or more of the aerodynamic bodies are permitted to rotate relative to the support structure.

9. The aerodynamic device according to claim 8, wherein actuation of the rotation of the aerodynamic bodies is either active or passive.

10. The aerodynamic device according to any of claims 1 to 7, wherein one or more of the aerodynamic bodies are fixed relative to the support structure.

11. The aerodynamic device according to any preceding claim, wherein one or more of the aerodynamic bodies comprise an aerofoil cross section, and optionally a leading edge, a trailing edge, and at least two outboard edges such that incoming airflow to the vehicle causes primary vortices to be generated off the outboard edges of the aerodynamic bodies.

12. The aerodynamic device according to any preceding claim, wherein the first configuration of the aerodynamic bodies has a first downforce and/or drag characteristic, and the second configuration of the aerodynamic bodies has a second downforce and/or drag characteristic, the first downforce and/or drag characteristic being different to the second downforce and/or drag characteristic.

13. The aerodynamic device according to any preceding claim, wherein the device is arranged such that incoming airflow to the vehicle passes from one aerodynamic body to another aerodynamic body.

14. A vehicle comprising the aerodynamic device of any of claims 1 to 13.

15. The vehicle of claim 14, further comprising a further aerodynamic body for mounting to the underside of the vehicle, the further aerodynamic body being:
fixedly mountable to the vehicle;
located rearwards of the aerodynamic bodies such that incoming airflow to the vehicle passes from one or more of the aerodynamic bodies to the further aerodynamic body; and
not directly attached to the support structure.
